# EUROPÄISCHE PATENTSCHRIFT

(11) **EP 2 160 806 B1**
(45) Veröffentlichungstag und Bekanntmachung des Hinweises auf die Patenterteilung: **20.02.2013**
(21) Anmeldenummer: 08760511.9
(22) Anmeldetag: 04.06.2008
(51) Int. Cl.: H01R 43/02

(54) **VERFAHREN ZUM ELEKTRISCH LEITENDEN VERBINDEN VON LITZEN SOWIE ULTRASCHALLSCHWEISSVORRICHTUNG**
METHOD FOR CONNECTINGSTRANDED WIRES IN AN ELECTRICALLY CONDUCTING MANNER AND ULTRASOUND WELDING DEVICE
PROCÉDÉ POUR CONNECTER DES TORONS DE MANIÈRE ÉLECTRIQUEMENT CONDUCTRICE ET DISPOSITIF DE SOUDAGE PAR ULTRASONS

(30) Priorität: 06.06.2007 DE 102007026707; 18.10.2007 DE 102007049842
(43) Veröffentlichungstag der Anmeldung: 10.03.2010
(73) Patentinhaber: Schunk Sonosystems Gmbh, 35435 Wettenberg (DE)
(72) Erfinder: STROH, Dieter, 35435 Wettenberg (DE); STROH, Heiko, 35435 Wettenberg (DE)
(74) Vertreter: Stoffregen, Hans-Herbert
(86) Internationale Anmeldenummer: PCT/EP2008/056931
(87) Internationale Veröffentlichungsnummer: WO 2008/148813

(56) Entgegenhaltungen:
- EP-A- 0 143 936
- DE-A1- 3 806 544
- DE-A1-102005 004 899
- DE-U1-202004 010 775
- US-A- 3 717 842

## Beschreibung

Die Erfindung bezieht sich auf ein Verfahren zum elektrisch leitenden Verbinden von im Wesentlichen aus Aluminium oder Aluminium-Legierungen bestehende Adern bzw. Einzeldrähte aufweisenden Litzen mit einem aus Metall bestehenden U-förmigen Träger mittels Ultraschallschweißens, wobei der Träger auf einer Gegenelektrode einer Ultraschallschweißvorrichtung angeordnet wird, die Litzen in den von Quer- und Seitenschenkeln begrenzten Raum des U-förmigen Trägers eingelegt und anschließend untereinander und mit dem Träger mittels einer in Ultraschallschwingung erregten Sonotrode verschweißt werden. Ferner nimmt die Erfindung Bezug auf eine Ultraschallschweißvorrichtung zur Durchführung des Verfahrens umfassend eine Ultraschallschwingungen übertragende Sonotrode mit einem eine Schweißfläche aufweisenden Sonotrodenkopf, eine der Schweißfläche gegenüberliegend dem U-förmigen Träger abstützende Gegenelektrode sowie vorzugsweise seitliche Begrenzungselemente mit Begrenzungsflächen, wobei die Schweißfläche einen Verlauf eines offenen gleichschenkligen Trapezes mit einer Bodenfläche und Seitenflächen aufweist, die Bodenfläche und die jeweilige Seitenfläche einen Winkel α mit 125° ≤ α ≤ 145° einschließen, und die Seitenflächen innere Flächen von über der Bodenfläche mit einer Höhe T vorstehenden Schenkeln der Sonotrode bzw. des -kopfs sind und den Sonotrodenkopf seitlich begrenzen.

Werden Litzen, die aus Einzeldrähten bzw. Adern aus Aluminium oder Aluminiummaterial bestehen, untereinander oder mit einem massiven Träger verschweißt, so hat sich in der Praxis gezeigt, dass die eingeleitete Schweißenergie dazu führt, dass das Aluminium in einem Umfang fließt, d. h. in die sogenannte teigige Phase übergeht, dass ein Anlegieren an die Sonotrodenfläche bzw. an die einen die Litzen aufnehmenden Verdichtungsraum seitlich begrenzenden Schieber erfolgt.

Um dies zu vermeiden, wurde vorgeschlagen, zwischen den Werkzeugen der Ultraschallschweißvorrichtung und den aus Aluminium bestehenden Litzen Zwischenfolien anzuordnen, die verhindern, dass ein unmittelbarer Kontakt mit den Schweißwerkzeugen erfolgt.

Von dem gleichen Gedanken macht die US-A-3,717,842 Gebrauch, die sich auf ein Verfahren zum Verschweißen von Aluminium-Drähten mit einem U-förmigen Träger bezieht. Um die Schweißverbindung herzustellen, wird zunächst der Träger in bekannter Weise um den Aluminiumdraht gecrimpt, um sodann den Schweißvorgang einzuleiten. Hierbei befindet sich zwischen der Sonotrode und den Drähten der umgecrimpte Abschnitt des Trägers.

Aus der DE-U-20 2004 010 775 ist eine Vorrichtung zum Verschweißen elektrischer Leiter bekannt, bei der eine Sonotrode zum Verschweißen eines U-förmigen Trägers mit Litzen eine Schweißfläche aufweist, die einen konkavförmigen Verlauf zeigt, der an eine Trapezgeometrie angepasst sein kann. Durch diese Geometrie soll erreicht werden, dass die beim Verschweißen auftretenden Querkräfte reduziert werden, um ein Verbiegen der Seitenschenkel des U-förmigen Trägers zu minimieren.

Sowohl das Einbringen einer Zwischenfolie als auch das zusätzliche Crimpen stellen verfahrenstechnische Nachteile dar, die insbesondere bei hochautomatisierten Schweißabläufen unerwünscht sind.

Der vorliegenden Erfindung liegt die Aufgabe zu Grunde, ein Verfahren und eine Ultraschallschweißvorrichtung zuvor beschriebener Art so weiterzubilden, dass aus Aluminium bestehende oder Aluminium enthaltende Litzen mit einem U-förmigen Massivteil verschweißt werden können, ohne dass Zwischenfolien erforderlich sind oder das Massivteil gecrimpt werden muss, um einen unmittelbaren Kontakt zwischen der Litze und den zum Verschweißen benötigten Werkzeugen zu vermeiden.

Erfindungsgemäß wird die Aufgabe verfahrensmäßig im Wesentlichen dadurch gelöst, dass als Sonotrode eine solche verwendet wird, deren Schweißfläche einen Verlauf eines offenen Trapezes mit kurzem Basisschenkel als Bodenfläche aufweist, und dass während des Verschweißens die Bodenfläche mit den von dieser ausgehenden und zu dieser einen stumpfen Winkel α einschließenden Seitenflächen unmittelbar die Litzen kontaktiert, wobei Gesarntquerwhnittsfläche F_{L} der in den U-förmigen Träger eingelegten Litzen im verschweißten Zustand zur Querschnittsfläche Fs des von der Bodenfläche und den Seitenflächen der Schweißfläche umgebenen Raums beträgt F_{S} < F_{L} < 2F_{S}.

Überraschenderweise hat sich gezeigt, dass dann, wenn ein erheblicher Teil der zu verschweißenden Drähte bzw. Adern der Litzen von den von der Schweißfläche der Sonotrode umgebenen und im Querschnitt ein gleichmäßiges Trapez bildenden Raum aufgenommen wird, ein Anlegierten an der Sonotrodenfläche unterbleibt. Ursächlich hierfür könnte sein, dass die beim Verdichten und Verschweißen der Litzen auftretenden Gesamtquerkräfte in erheblichem Umfang von den Seitenflächen der Sonotrode, also den Flanken des die Schweißfläche zur Verfügung stellenden Sonotrodenkopfes aufgenommen werden, so dass die außerhalb des von der Schweißfläche begrenzten Raums vorhandenen Litzen ungeachtet des beim Schweißen auftretenden Fließens an den Bereichen des Sonotrodenkopfes nicht anlegieren. Dies gilt auch für die außerhalb der dem Verlauf eines offenen gleichschenkligen Trapezes folgenden Schweißfläche verlaufenden Bereiche.

Eine weitere Erklärung dafür, dass innerhalb der den Querschnitt eines Trapezes bildenden Aufnahme des Sonotrodenkopfes ein Anlegieren nicht erfolgt, kann sein, dass in diesem Bereich die größte Relativbewegung gegeben ist, so dass auch dann, wenn bereichsweise ein Anschweißen erfolgen sollte, die Verbindung durch die Relativbewegung abgelöst wird.

Insbesondere wird ein Anlegieren an den beim Eintauchen in den U-förmigen Träger entlang dessen Seitenschenkeln verlaufenden Außenflächen des Sonotrodenkopfes dann vermieden, wenn der lichte Abstand der Seitenschenkel des U-förmigen Trägers, Breite der Sonotrode bzw. des Sonotrodenkopfes und die zu verschweißenden Adern in ihren Abmessungen derart aufeinander abgestimmt werden, dass beim Eintauchen der Sonotrode bzw. des Sonotrodenkopfs in den U-förmigen Trägern zum Verschweißen der Adern untereinander und mit dem Träger zwischen Innenfläche des jeweiligen Seitenschenkels des U-förmigen Trägers und zugewandter Außenfläche der Sonotrode bzw. des Sonotrodenkopfs ein Spalt mit der Breite S mit S ≤ ½ A_{D} besteht, wobei A_{D} Durchmesser der jeweiligen Adern der Litzen ist. Werden Litzen mit Adern unterschiedlicher Querschnitte verschweißt, so sollte die Breite des Spaltes auf die Adern kleinsten Durchmessers ausgelegt werden.

Zwar ist es bekannt, üblicherweise aus Kupfer bestehende Litzen mit einem U-förmigen Träger zu verschweißen, bei dem die Sonotrode litzenseitig eine Schweißfläche aufweist, die einen konkavförmigen Verlauf zeigt, der an eine Trapezgeometrie angepasst sein kann (DE-U-20 2004 010 775). Durch diese Geometrie soll erreicht werden, dass die beim Verschweißen auftretenden Querkräfte reduziert werden, um ein Verbiegen der Seitenschenkel des U-förmigen Trägers zu minimieren. Die Dimensionierung der Schweißfläche der Sonotrode ist dabei derart gewählt, dass die Litzen im verschweißten Zustand einen Gesamtquerschnitt aufweisen, der ein Vielfaches der Querschnittsfläche des Raums ist, der von der Schweißfläche der Sonotrode begrenzt ist. Insbesondere soll durch die diesbezügliche Lehre auch erreicht werden, dass der Träger mit aus Kupfer bestehenden Litzen sicher verschweißt werden kann, die im verschweißten Zustand die Seitenschenkel des Trägers überragen.

Als Material für den U-förmigen Träger sollte zumindest eines aus der Gruppe SE-Cu58, SF-Cu, E-Cu58, CuNi3SiMg, CuFe2P, CuCrSiTi, CuZn37, CuSn6, CuSn8 verwendet werden. Die Bezeichnung der Materialien entspricht dabei der DIN-Norm.

Insbesondere ist vorgesehen, dass als Werkstoffe für den Träger ein federharter benutzt wird, der für höherwertige Steckverbinder geeignet ist. In diesem Fall sollte jedoch zumindest die litzenseitige Fläche des Trägers insbesondere mit Silber oder einem Silber enthaltenden Material z. B. durch Galvanisieren beschichtet sein.

In Weiterbildung der Erfindung ist vorgesehen, dass eine Sonotrode verwendet wird, die litzenseitig einen U-förmigen Kopfabschnitt aufweist, der innenseitig die Schweißfläche mit der Bodenfläche und den unter den Winkel α verlaufenden Seitenflächen begrenzt, die Innenflächen von Seitenschenkeln des Kopfabschnitts sind, wobei der Sonotrodenkopf eine Breite B aufweist und die Seitenschenkel über der Bodenfläche mit einer Höhe T vorstehen mit 0,15 B ≤ T ≤ 0,30 B.

Des Weiteren sollte eine Sonotrode zum Einsatz gelangen, bei der der zwischen der Bodenfläche und der jeweilige Seitenfläche verlaufende Winkel α beträgt 125° ≤ α ≤ 145°.

Der die Litzen aufnehmende und von der Schweißfläche der Sonotrode umgebene Raum wird von Seitenschenkeln bzw. Stegen begrenzt, deren Stirnfläche parallel zur Bodenfläche verlaufen. Dabei sollte die Breite der jeweiligen Stirnfläche zwischen 0.25 mm und 1,5 mm betragen. Durch diese Dimensionierung ist gleichfalls sichergestellt, dass beim Schweißen ein Anlegieren des Aluminiums vermieden wird.

Die Sonotrode bzw. der Sonotrodenkopf, der in den U-förmigen Träger, also das Massivteil eintaucht, kann eine Breite B zwischen 1 mm und 25 mm haben.

Eine Ultraschallschweißvonichtung der eingangs genannten Art zeichnet sich dadurch aus, dass die Schenkel des Sonotrodenkopfs Stirnflächen aufweise, die parallel zu der Bodenfläche der Schweißfläche verlaufen, dass jede Stirnfläche eine Breite A mit 0,25 mm ≤ A ≤ 1,5 mm aufweist, und dass der Sonotrodenkopf eine Breite B aufweist, die sich zur Höhe T verhält wie 0,15 B ≤ T ≤ 0,30 B.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungabeispielen.

Es zeigen:
- Fig. 1: eine Anordnung einer Ultraschallschweißanlage in prinzipieller Darstellung,
- Fig. 2a, b: Prinzipdarstellungen des Verdichtens und Verschweißens von Aluminiumlitzen mit einem U-förmigen Träger nach dem Stand der Technik,
- Fig. 3a - 3c: in prinzipieller Darstellung einen Crimp- und Schweißverlauf nach dem Stand der Technik.
- Fig. 4a, 4b: in prinzipieller Darstellung das Verdichten und Verschweißen von Aluminiumlitzen mit einem U-förmigen Träger nach der Erfindung und
- Fig. 5: eine weitere Prinzipdarstellung einer erfindungsgemäß zum Einsatz gelangenden Sonotrode.

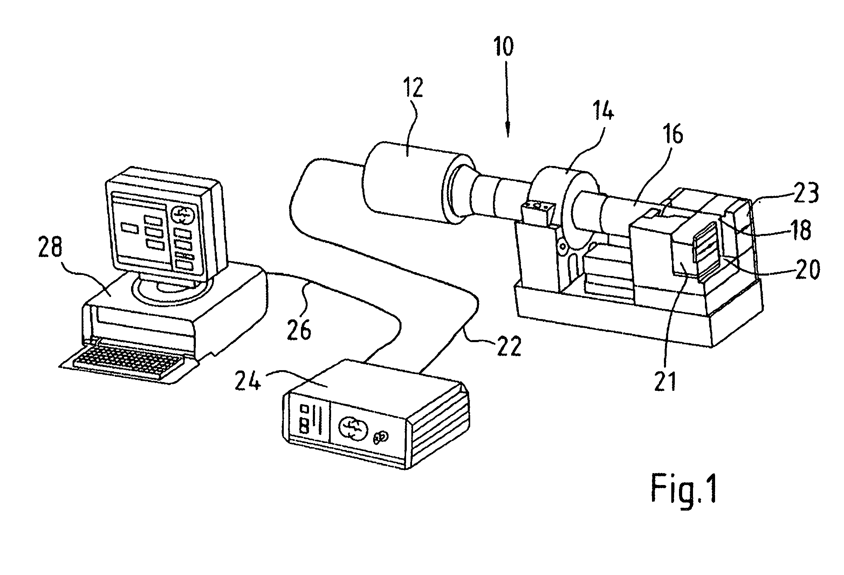

In Fig. 1 ist rein prinzipiell eine Ultraschallschweißanlage dargestellt, in der aus Aluminium bestehende oder Aluminium enthaltende Litzen, d. h. deren feine Drähte oder Adern, mit einem Stanz-/Biegeteil in Form eines U-förmigen Massivträgers aus Metall verschweißt werden können. Die Anlage umfasst eine Ultraschallschweißvorrichtung oder -maschine 10, die in gewohnter Weise einen Konverter 12, ggfs. einen Booster 14 sowie eine Sonotrode 16 aufweist. Der Sonotrode 16, d. h. deren Kopf 18 und damit dessen Schweißfläche sind eine Gegenelektrode 20 - auch Amboss genannt - sowie Seitenschieber 21, 23 zugeordnet, um einen Verdichtungsraum zu umgeben.

Der Konverter 12 ist über eine Leitung 22 mit einem Generator 24 verbunden, der seinerseits über eine Leitung 26 zu einem Rechner 28 führt, über den eine Steuerung des Schweißprozesses erfolgt und in den Schweißparameter bzw. Querschnitt und Materialien der zu verschweißenden Litzen und Träger eingegeben bzw. von dem entsprechende abgespeicherte Werte abgerufen werden können.

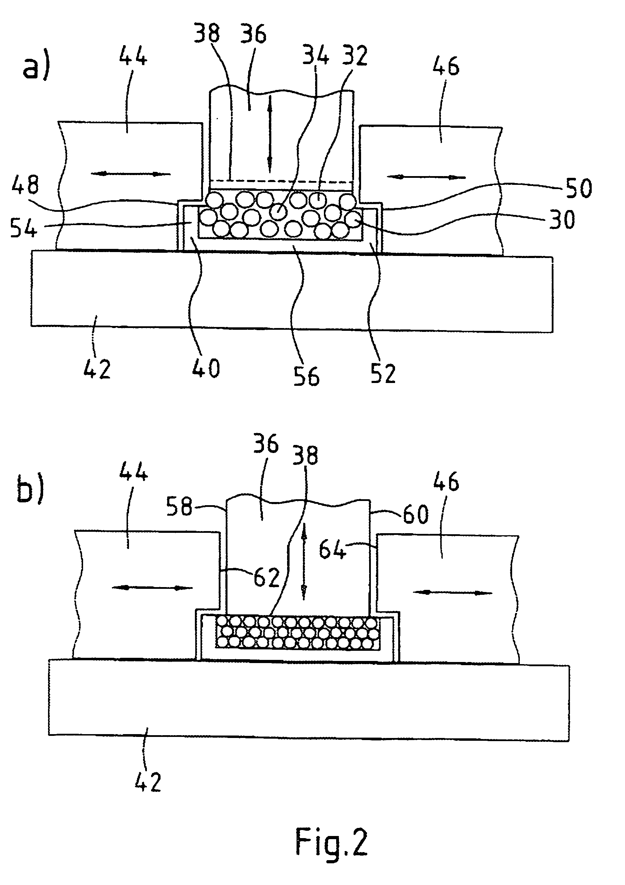

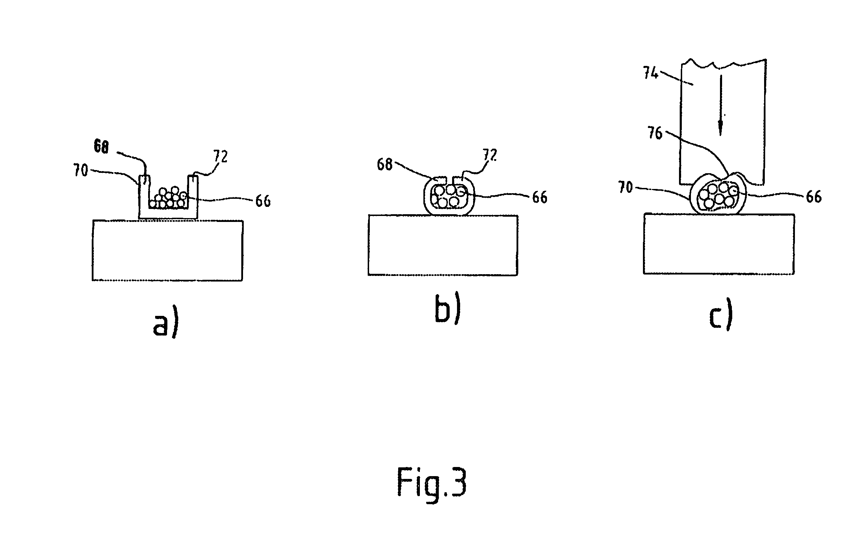

Nach dem Stand der Technik (Fig. 2a, 2b, Fig. 3a), b), c)) werden aus Aluminium bestehende Litzen 30, die aus einzelnen dünnen Drähten oder Äderchen 32, 34 bestehen, mittels einer Sonotrode 36 verschweißt, die eine plane Schweißfläche 38 aufweist. In der Schweißfläche 38 können gewünschte Strukturen wie Wellen, Pyramiden oder Ähnliches ausgebildet sein. Um ein Anlegieren der Litze 30, d. h. deren Drähte 32, 34 an der Sonotrode 36 bzw. deren Schweißfläche 38 auszuschließen, sieht der Stand der Technik vor, dass auf die Litzen 30 eine Folie gelegt wird, durch die ein unmittelbarer Kontakt zwischen den Äderchen 32, 34 und der Schweißfläche 38 vermieden wird.

Werden diesbezügliche Zwischenfolien nicht eingebracht, so erfolgt ein Anlegieren des durch das Einleiten der Ultraschallschwingungen teigig werdenden Aluminiums, das folglich fließt. Dies soll aus einem Vergleich der Fig. 2a und 2b ersichtlich werden. So ist ein mit den Litzen 30 zu verschweißender U-förmiger Träger 40 auf einem Amboss 42 einer Ultraschallschweißmaschine angeordnet, wie diese prinzipiell der Fig. 1 zu entnehmen ist. Seitlich zu dem Träger 40 sind Seitenschieber 44, 46 verschiebbar angeordnet, die derart zu dem Träger 40 ausgerichtet werden, dass dieser von stufenförmigen Aussparungen 48, 50 mit seinen Seitenschenkeln 52, 54 aufgenommen ist, die über einen Querschenkel 56 verbunden sind, der auf dem Amboss 42 aufliegt.

Erfolgt nun ein Verdichten und Verschweißen durch Absenken der Sonotrode 36 und Erregung dieser, so fließt das Aluminiummaterial der Litzen 30 mit der Folge, dass dieses nicht nur an der Schweißfläche 38 anlegiert, sondern auch in den Spalt zwischen den Sonotrodenseitenflächen 58, 60 und den zugewandten Begrenzungsflächen 62, 64 der Seitenschieber 44, 46 eindringt und dort sowohl an den Flächen 62, 64 der Seitenschieber 44. 46 als auch an den Außenflächen 58, 60 der Sonotrode 36 anlegieren kann.

Um dieses Anlegieren zu vermeiden, schlägt die US-A-3,717,842 vor, dass aus Aluminium bestehende Litzen 66 in einen U-förmigen Träger 68 eingebracht werden, dessen Seitenschenkel 70, 72 derart dimensioniert sind, dass diese zunächst um die Litzen 66 gecrimpt werden können (Fig. 3b), um sodann beim Absenken einer Sonotrode 74, mittels der das Verschweißen der Litzen 66, d. h. deren dünnen Drähte mit dem gecrimpten Träger 70 erfolgt, deren Schweißfläche 76 nicht unmittelbar mit den Litzen 66 bzw. deren Drähten in Kontakt gelangt. Somit wird prinzipiell eine technische Lösung verwirklicht, wie diese bereits mit der Zwischenfolie gemäß den Erläuterungen in Fig. 2a und 2b verwirklicht wird.

Das Crimpen bzw. Einlegen von Zwischenfolie hat jedoch bei insbesondere hochautomatisierten in Produktionsabläufen durchzuführenden Schweißverfahren Nachteile, da hierdurch nicht nur Fehlerquellen entstehen, sondern eine Zeitverzögerung und damit Kostenerhöhung gegeben ist.

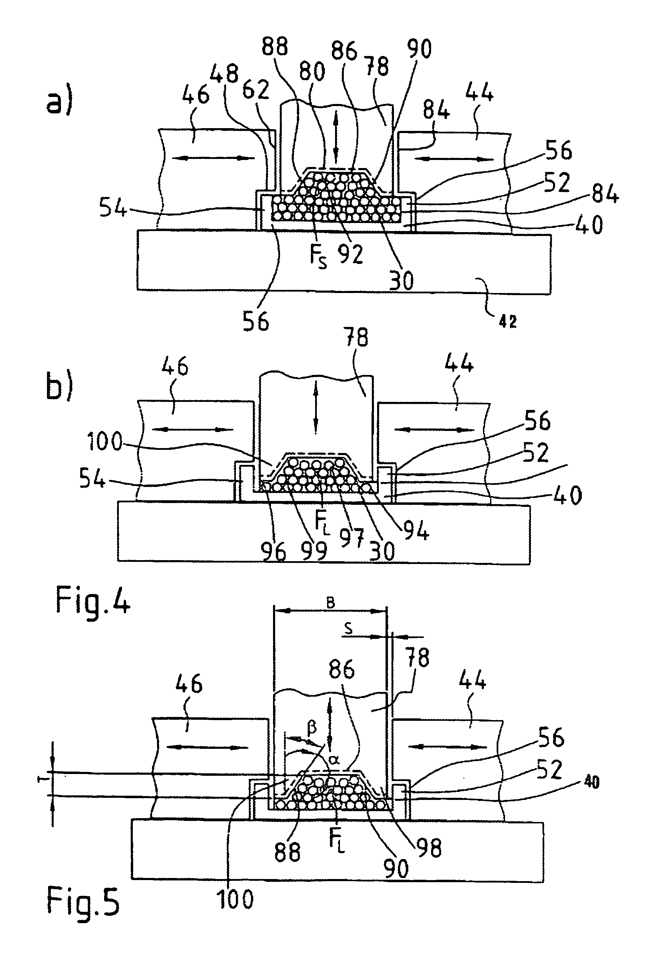

Um diese Nachteile zu vermeiden, sieht die erfindungsgemäße Lehre - entsprechend der Prinzipdarstellung in den Fig. 4a, 4b, 5, in denen grundsätzlich die den Fig. 2a, 2b zu entnehmenden Bezugzeichen für gleiche Elemente verwendet werden, - vor, dass eine Sonotrode 78 einer üblichen Ultraschallschweißmaschine in ihrer Schweißfläche 80 derart ausgebildet wird, dass die das Anlegieren fördernden Querkräfte, die beim Verschweißen entstehen, von der Sonotrode 78 im erheblichen Umfang aufgenommen werden, so dass überraschenderweise ein Anlegieren nicht festzustellen ist.

Entsprechend der Darstellung der Fig. 2a, 2b wird auf dem Amboss 42 der U-förmige Träger 40 mit den Seitenschenkeln 52, 54 und dem Querschenkel 56 positioniert. Sodann werden die Seitenschieber 44, 46 an den Träger 52 herangefahren, wobei aufgrund der stufenförmigen Aussparung 48, 50 in den Seitenbegrenzungsflächen 62, 64 die Querschenkel 52, 54 aufgenommen werden, so dass die Begrenzungsflächen 62, 64 außerhalb der Stufen 48, 50 nahezu fluchtend in die Innenflächen 82, 84 der Seitenschenkel 52, 54 des U-förmigen Trägers 40 übergehen.

Die in den Träger 40 eintauchende Sonotrode 78 bzw. deren Kopf weist erfindungsgemäß eine Schweißfläche 80 auf, die den Verlauf eines offenen gleichschenkligen Trapez mit kürzerer Bodenfläche 86 und Seitenflächen 88, 90 zeigt, wobei die jeweilige Seitenfläche 88, 90 zur Bodenfläche 86 einen Winkel α bzw. β + 90° einschließt, der sich beläuft auf 125° ≤ α ≤ 145°. Ferner weist die Schweißfläche 80 eine Tiefe T derart auf, dass der von den Seitenflächen 88, 90 und der Bodenfläche 86 begrenzte Raum 92 einen Querschnitt aufweist, der größer als der halbe Querschnitt F_{L} der Litzen 30, also der Adern 32, 34, im verschweißten Zustand ist, der in Fig. 4b prinzipiell dargestellt ist. Folglich ist die eine Trapezform aufweisende Querschnittsfläche 97 der verschweißten Adern 32, 34 größer als die untere rechteckige Querschnittsfläche 99, also die Fläche, die sich zwischen den Stirnflächen 94, 96 der Schenkel 98, 100 des Sonotrodenkopfs und der Bodenfläche des Querschenkels 56 des Trägers 40 erstreckt.

Somit weist der Sonotrodenkopf im Bereich der Schweißfläche 80 eine U-Geometrie auf, deren Öffnung den Litzen 30 zugewandt ist.

Durch die erfindungsgemäße Lehre bzw. die angegebenen Dimensionierungen wird erreicht, dass die auf die Litzen 30 insgesamt einwirkenden Querkräfte erheblich reduziert werden, die durch das Absenken der Sonotrode 78 sowie bei ultraschallerregter Sonotrode 78 entstehen, mit der Folge, dass das fließende Aluminiummaterial, das eine teigige Phase ist, nicht dazu neigt, an der Schweißfläche 80 sowie an den Stirnflächen 94, 96 der Schenkel 98, 100 anzulegieren, die seitlich den von der Bodenfläche 86 und den Seitenflächen 88, 90 der Schweißfläche 80 umgebenden Raum 92 begrenzen. Folglich sind die Innenflächen der Schenkel oder Stege 98, 100 des Sonotrodenkopfs die Seitenflächen 88, 90 der Schweißfläche 80.

Dass ein Anlegieren des Aluminium an der Schweißfläche 80 nicht erfolgt, ist zusätzlich möglicherweise auch damit zu erklären, dass in diesem Bereich die größte Relativbewegung zwischen den Adern 32, 34 und der Schweißfläche 80 auftreten, so dass auch dann, wenn ein momentanes Anlegieren erfolgen sollte, dieses aufgrund der Relativbewegung zerstört wird.

Ein Fließen des Aluminiums in den Spalt S zwischen der Außenfläche der Sonotrode 78 bzw. deren Kopf und den seitlichen Begrenzungsflächen 62, 64 der Seitenschieber 46, 48 wird zusätzlich dadurch verhindert, dass der lichte Abstand der Innenflächen 82, 84 des "U"-förmigen Trägers 40, also dessen Seitenschenkel 52, 54, der Querschnitt und damit der Durchmesser der einzelnen Adern 32, 34, die Breite B der Sonotrode 78 und folglich auch der Abstand der Seitenschieber 46, 48 derart aufeinander abgestimmt sind, dass sich eine Spaltbreite S ergibt, die kleiner als die Hälfte des Durchmessers A_{D} der jeweiligen zu verschweißenden Adern 32, 34 ist. Sofern Litzen 30 mit Adern unterschiedlichen Querschnitts verschweißt werden sollen, wird der Spalt S auf den Durchmesser der Adern kleinsten Querschnitts abgestimmt. Die Adern 34, 36 können Durchmesser im Bereich von 0,1 mm bis 1 mm aufweisen.

Die Höhe T des von der Schweißfläche 80 umgebenen Raums, also die Höhe der Schenkel 98, 100, die über der Bodenfläche 86 vorstehen, sollte sich zur Breite B der Sonotrode 78 bzw. des Sonotrodenkopfes verhalten wie 0,15 B ≤ T ≤ 0,3 B. Die Breite des Sonotrodenkopfes, der in den U-förmigen Träger 40 eintaucht, liegt bevorzugterweise im Bereich zwischen 1 mm und 25 mm.

Des Weiteren sollte die Stirnfläche 94, 96 des jeweiligen Schenkels 98, 100 eine Breitenerstreckung zwischen den Seitenschenkeln 52, 54 des U-förmigen Trägers im Bereich zwischen 0,25 mm und 1,5 mm aufweisen. Auch durch diese Dimensionierung wird zusätzlich sichergestellt, dass ein Anlegieren des Aluminiums unterbleibt.

Als Materialien für den Träger 40 sollte eines aus der nachstehenden Gruppe ausgewählt werden: SE-Cu58, SF-Cu, E-Cu58, CuNi3SiMg, CuFe2P, CuCrSiTi, CuZn37, CuSn6, CuSn8. Die Bezeichnungen der Materialien entsprechen der DIN-Norm.

Für höherwertige Anschlüsse werden üblicherweise U-Träger aus federhartem Stahl wie CuCRSiTi benutzt.

Um aufgrund der unterschiedlichen Härtegrade von Aluminium und dem Trägermaterial sicherzustellen, dass ein stoffschlüssiges Verbinden erfolgt, sollte bevorzugterweise die Innenfläche des Trägers z. B. durch Galvanisieren mit vorzugsweise Silber bzw. einem Silber enthaltendem Material beschichtet sein.

Des Weiteren ergibt sich aufgrund der erfindungsgemäßen Ausbildung der Sonotrode 78 und die vorgesehene Höhe T des von der Schweißfläche 80 umgebenden Raums der Vorteil, dass die Sonotrode 78 in erheblichem Umfang in den U-förmigen Träger 40 eintaucht, so dass infolgedessen die auf die Seitenschenkel 52, 54 des Trägers 40 einwirkenden Querkräfte mit der Folge reduziert werden, dass als Grundmaterial für den Träger 40 ein im Vergleich zum Stand der Technik weicheres Material benutzt werden kann. Die U-Form gestaltet den Träger 40 wesentlich biegesteifer.

## Patentansprüche

1. Verfahren zum elektrisch leitenden Verbinden von im Wesentlichen aus Aluminium oder Aluminium-Legierungen bestehende Adern bzw. Einzeldrähte (32, 34) aufweisenden Litzen (30) mit einem aus Metall bestehenden U-förmigen Träger (40) mittels Ultraschallschweißens, wobei der Träger auf einer Gegenelektrode (42) einer Ultraschallschweißvorrichtung (10) angeordnet wird, die Litzen in den von Quer- und Seitenschenkeln (52, 54, 56) begrenzten Raum des U-förmigen Trägers eingelegt und anschließend untereinander und mit dem Träger mittels einer in Ultraschallschwingung erregten Sonotrode (16, 78) verschweißt werden, wobei
als Sonotrode (16, 78) eine solche verwendet wird, deren Schweißfläche (80) einen Verlauf eines offenen Trapezes mit kurzem Basisschenkel als Bodenfläche (86) aufweist, und dass während des Verschweißens die Bodenfläche mit den von dieser ausgehenden und zu dieser einen stumpfen Winkel α einschließenden Seitenflächen (88, 90) unmittelbar die Litzen (30) kontaktiert, **dadurch gekennzeichnet, dass** die Gesamtquerschnittsfläche F_{L} der in den U-förmigen Träger (40) eingelegten Litzen im verschweißten Zustand zur Querschnittsfläche F_{S} des von der Bodenfläche und den Seitenflächen der Schweißfläche umgebenen Raums beträgt F_{S} < F_{L} < 2Fs.

2. Verfahren nach Anspruch 1,
**dadurch gekennzeichnet,**
**dass** der lichte Abstand der Seitenschenkel (52, 54) des U-förmigen Trägers (40), Breite der Sonotrode (78) und die zu verschweißenden Adern (32, 34) in ihren Abmessungen derart aufeinander abgestimmt werden, dass beim Eintauchen der Sonotrode in den U-förmigen Träger zum Verschweißen der Adern untereinander und mit dem Träger zwischen jeweiliger Innenfläche des Seitenschenkels des U-förmigen Trägers und zugewandter Außenfläche der Sonotrode ein Spalt einer Breite S mit S ≤ ½ A_{D} besteht, wobei A_{D} Durchmesser der jeweiligen Adern der Litzen ist.

3. Verfahren nach Anspruch 1 oder 2,
**dadurch gekennzeichnet,**
**dass** beim Verschweißen von Litzen (30) mit Adern (32, 34) unterschiedlicher Durchmesser die Breite S des Spaltes auf die Adern kleinsten Durchmessers ausgelegt wird.

4. Verfahren nach zumindest einem der vorhergehenden Ansprüche,
**dadurch gekennzeichnet,**
**dass** als Material für den U-förmigen Träger (40) zumindest eines aus der Gruppe SE-Cu58, SF-Cu, E-Cu58, CuNi3SiMg, CuFe2P, CuCrSiTi, CuZn37, CuSn6. CuSn8 verwendet wird.

5. Verfahren nach zumindest einem der vorhergehenden Ansprüche,
**dadurch gekennzeichnet,**
**dass** als Material für den U-förmigen Träger (40) ein federharter Werkstoff verwendet wird. der leiterseitig beschichtet wird.

6. Verfahren nach zumindest einem der vorhergehenden Ansprüche,
**dadurch gekennzeichnet,**
**dass** der Träger (40) leiterseitig mit Silber oder einem Silber enthaltenden Material vorzugsweise durch Galvanisieren beschichtet wird.

7. Verfahren nach zumindest einem der vorhergehenden Ansprüche,
**dadurch gekennzeichnet,**
**dass** eine Sonotrode (78) verwendet wird, die leiterseitig einen U-förmigen Kopfabschnitt aufweist, der innenseitig die Schweißfläche (80) mit der Bodenfläche (86) und die den unter dem Winkel α verlaufenden Seitenflächen (88, 90) begrenzt, die Innenflächen von Seitenschenkeln (98, 100) des Kopfabschnitts sind, wobei die Sonotrode eine Breite B aufweist und die Seitenschenkel über der Bodenfläche mit einer Länge T vorstehen mit 0,15 B ≤ T ≤ 0,30 B.

8. Verfahren nach zumindest einem der vorhergehenden Ansprüche,
**dadurch gekennzeichnet,**
**dass** eine Sonotrode (78) verwendet wird, bei der der zwischen der Bodenfläche (86) und der jeweiligen Seitenfläche (88, 90) verlaufende Winkel α beträgt 125° ≤ α ≤ 145°.

9. Verfahren nach zumindest einem der vorhergehenden Ansprüche,
**dadurch gekennzeichnet,**
**dass** eine Sonotrode (78) verwendet wird mit den Seitenschenkeln (98, 100), deren Stirnflächen (94, 96) parallel zur Bodenfläche (80) verlaufen, wobei Breite A der jeweiligen Stirnfläche beträgt 0,25 mm ≤ A ≤ 1,5 mm.

10. Verfahren nach zumindest einem der vorhergehenden Ansprüche,
**dadurch gekennzeichnet,**
**dass** eine Sonotrode (78) mit der Breite B verwendet wird mit 1 mm ≤ B ≤ 25 mm.

11. Ultraschallschweißvorrichtung (10) zur Durchführung des Verfahrens nach Anspruch 1, umfassend eine Ultraschallschwingungen übertragende Sonotrode (16, 78) mit einem eine Schweißfläche (80) ausweisenden Sonotrodenkopf, eine der Schweißfläche gegenüberliegende den U-förmigen Träger (40) abstützende Gegenelektrode (42) sowie vorzugsweise seitliche Begrenzungselemente (46, 48) mit Begrenzungsflächen (62, 64), wobei die Schweißfläche (80) einen Verlauf eines offenen gleichschenkligen Trapezes mit einer Bodenfläche (86) und Seitenflächen (88, 90) aufweist, die Bodenfläche und die jeweilige Seitenfläche einen Winkel α mit 125° ≤ α ≤ 145° einschließen, und die Seitenflächen innere Flächen von über der Bodenfläche mit einer Höhe T vorstehenden Schenkeln (98, 100) der Sonotrode (78) bzw. des -kopfs sind und den Sonotrodenkopf seitlich begrenzen,
**dadurch gekennzeichnet,**
**dass** die Schenkel (98, 100) des Sonotrodenkopfs (78) Stirnflächen (94, 96) aufweisen, die parallel zu der Bodenfläche (86) der Schweißfläche (80) verlaufen, dass jede Stirnfläche eine Breite A mit 0,25 mm ≤ A ≤ 1,5 mm aufweist, und dass der Sonotrodenkopf eine Breite B aufweist, die sich zur Höhe T verhält wie 0,15 B ≤ T ≤ 0,30 B.

## Claims

1. Method for the electrically conductive connecting of strands (30) having conductors or single wires (32, 34) consisting essentially of aluminum or aluminum alloys, to a U-shaped carrier (40) consisting of metal, by means of ultrasound welding, wherein the carrier is arranged on a backplate electrode (42) of an ultrasound welding device (10), the strands are inserted into the space bounded by cross and lateral legs (52, 54, 56) of the U-shaped carrier, and are then welded to each other and to the carrier by means of a sonotrode (16, 78) excited into ultrasonic oscillation, wherein the sonotrode (16, 78) used is one whose welding surface (80) has the trend of an open trapezium with short base leg as bottom surface (86), and during the welding the bottom surface with the side surfaces (88, 90) emerging from it and subtending an obtuse angle α relative to it make direct contact with the stranded conductors (30),
**characterized in**
**that** the overall cross sectional area F_{L} of the strands placed in the U-shaped carrier (40) in the welded state relative to the cross sectional area F_{S} of the space enclosed by the bottom surface and the side surfaces of the welding surface is F_{S} < F_{L} <2Fs.

2. Method according to claim 1,
**characterized in**
**that** the clear distance from the side legs (52, 54) of the U-shaped carrier (40), width of the sonotrode (78), and the conductors (32, 34) to be welded are adapted to each other in their dimensions so that when the sonotrode is inserted into the U-shaped carrier to weld the conductors to each other and to the carrier a gap of width S, with S ≤ ½ A_{D}, where A_{D} is the diameter of the respective conductors of the strand, remains between the respective inner surface of the side leg of the U-shaped carrier and the outer surface of the sonotrode that is facing it.

3. Method according to claim 1 or 2,
**characterized in**
**that** when welding strands (30) with conductors (32, 34) of different cross sections, the width S of the gap is designed for the conductors of smallest diameter.

4. Method according to at least one of the preceding claims,
**characterized in**
**that** the material for the U-shaped carrier (40) is at least one from the group of SE-Cu58, SF--Cu, E-Cu58, CuNi3SiMg, CuFe2P, CuCrSiTi, CuZn37, CuSn6, CuSn8.

5. Method according to at least one of the preceding claims,
**characterized in**
**that** the material for the U-shaped carrier (40) is a cold hammered material, which is coated at the conductor side.

6. Method according to at least one of the preceding claims,
**characterized in**
**that** the carrier (40) at the conductor side is coated with silver or a material containing silver, preferably by galvanization.

7. Method according to at least one of the preceding claims,
**characterized in**
**that** a sonotrode (778) is used, having a U-shaped head segment at the conductor side, bounding on its inside the welding surface (80) with the bottom surface (86) and the side surfaces (88, 90) extending at an angle α, which are inner surfaces of side legs (98, 100) of the head segment, with the sonotrode having a width B and the side legs projecting beyond the bottom surface by a length T such that 0.15B ≤ T ≤ 0.30B.

8. Method according to at least one of the preceding claims,
**characterized in**
**that** a sonotrode (78) is used in which the angle α between the bottom surface (86) and the respective side surface (88, 90) is 125° ≤ α ≤ 145°.

9. Method according to at least one of the preceding claims,
**characterized in**
**that** a sonotrode (78) is used with side legs (98, 100), whose end faces (94, 96) run parallel to the bottom surface (80), with width A of the respective end face being 0.25 mm ≤ A ≤ 1.5 mm.

10. Method according to at least one of the preceding claims,
**characterized in**
**that** a sonotrode (78) is used with the width B with 1 mm ≤ B ≤ 25 mm.

11. Ultrasound welding device (10) to carry out the method of claim 1, comprising a sonotrode (16, 78) that transmits ultrasonic vibrations and comprises a sonotrode head having a welding surface (80), a backplate electrode (42) supporting the U-shaped carrier (40) and situated opposite the welding surface, as well as preferably side boundary elements (46, 48) with boundary surfaces (62, 64), with the welding surface (80) having a trend of an open equilateral trapezium with a bottom surface (86) and side surfaces (88, 90), the bottom surface and the respective side surface subtend an angle α with 125° ≤ α ≤ 145°, and the side surfaces are inner surfaces of legs (98, 100) of the sonotrode (78) or sonotrode head projecting by a height T above the bottom surface and bounding the sonotrode head at the sides,
**characterized in**
**that** the legs (98, 100) of the sonotrode head (78) have end faces (94, 96) which run parallel to the bottom surface (86) of the welding surface (80), that each end face has a width A with 0.25 mm ≤ A ≤ 1.5 mm, and that the sonotrode head has a width B, which stands in a ratio to the height T as 0.15B ≤ T ≤ 0.30B.

## Revendications

1. Procédé destiné à relier de manière électroconductrice par soudage par ultrasons des fils toronnés (30) présentant des brins ou des conducteurs simples (32, 34) constitués essentiellement d'aluminium ou d'alliages d'aluminium, avec un support en U (40) constitué de métal, sachant que le support est disposé sur une contrélectrode (42) d'une soudeuse à ultrasons (10), que les fils toronnés sont placés dans l'espace délimité par les branches transversales et latérales (52, 54, 56) du support en U puis soudés entre eux et avec le support au moyen d'une sonotrode (16, 78) excitée par une vibration ultrasonore, qu'est utilisée une sonotrode (16, 78) dont la surface de soudage (80) présente l'allure d'un trapèze ouvert avec petite base en tant que face de fond (86), et que pendant le soudage, la face de fond, avec les faces latérales (88, 90) partant d'elle et inscrivant avec elle un angle obtus α, entrent directement en contact avec les fils toronnés (30),
**caractérisé en ce**
**qu'**à l'état soudé, la relation entre la superficie totale de la section transversale F_{L} des fils toronnés placés dans le support en U (40) et la superficie de la section transversale F_{S} de l'espace délimité par la face de fond et les faces latérales de la surface de soudage est telle que F_{S} < F_{L} < 2Fs.

2. Procédé selon la revendication 1,
**caractérisé en ce**
**que** dans leurs dimensions, la distance intérieure entre les branches latérales (52, 54) du support en U (40), la largeur de la sonotrode (78) et les brins à souder (32, 34) sont ajustés entre eux de manière telle que, lors de la plongée de la sonotrode dans le support en U afin de souder les brins entre eux et avec le support, il y a entre les faces intérieures respectives des branches latérales du support en U et les faces extérieures en regard de la sonotrode un interstice d'une largeur S telle que S ≤ ½ A_{D}, A_{D} étant le diamètre des brins respectifs des fils toronnés.

3. Procédé selon la revendication 1 ou 2,
**caractérisé en ce**
**que** lors du soudage de fils toronnés (30) avec des brins (32, 34) de différents diamètres, la largeur S de l'interstice est dimensionnée en fonction des brins de plus petit diamètre.

4. Procédé selon au moins une des revendications précédentes,
**caractérisé en ce**
**qu'**en tant que matériau pour le support en U (40) est utilisé au moins un du groupe SE-Cu58, SF-Cu, E-Cu58, CuNi3SiMg, CuFe2P, CuCrSiTi, CuZn37, CuSn6, CuSn8.

5. Procédé selon au moins une des revendications précédentes,
**caractérisé en ce**
**qu'**en tant que matériau pour le support en U (40) est utilisé une matière écrouie qui est revêtue du côté conducteur.

6. Procédé selon au moins une des revendications précédentes,
**caractérisé en ce**
**que** le support (40) est revêtu du côté conducteur, de préférence par galvanisation, avec de l'argent ou un matériau contenant de l'argent.

7. Procédé selon au moins une des revendications précédentes,
**caractérisé en ce**
**qu'**est utilisée une sonotrode (78) qui présente du côté conducteur une section de tête en U qui délimite à l'intérieur la surface de soudage (80) avec la face de fond (86) et les faces latérales (88, 90) s'étendant sous l'angle α, qui sont les faces intérieures de branches latérales (98, 100) de la section de tête, sachant que la sonotrode présente une largeur B et que les branches latérales sont en ressaut par rapport à la face de fond sur une longueur T telle que 0,15 B ≤ T ≤ 0,30 B.

8. Procédé selon au moins une des revendications précédentes,
**caractérisé en ce**
**qu'**est utilisée une sonotrode (78) sur laquelle l'angle α s'inscrivant entre la face de fond (86) et les faces latérales (88, 90) respectives est tel que 125° ≤ α ≤ 145°.

9. Procédé selon au moins une des revendications précédentes,
**caractérisé en ce**
**qu'**est utilisée une sonotrode (78) avec les branches latérales (98, 100), dont les faces frontales (94, 96) s'étendent parallèlement à la face de fond (80), sachant que la largeur A de chaque face frontale est telle que 0,25 mm ≤ A ≤ 1,5 mm.

10. Procédé selon au moins une des revendications précédentes,
**caractérisé en ce**
**qu'**est utilisée une sonotrode (78) ayant une largeur B telle que 1 mm ≤ B ≤ 25 mm.

11. Soudeuse à ultrasons (10) destinée à réaliser le procédé selon la revendication 1, comprenant une sonotrode (16, 78) transmettant des vibrations ultrasonores, avec une tête de sonotrode présentant une surface de soudage (80), une contrélectrode (42) opposée à la surface de soudage et soutenant le support en U (40), ainsi que de préférence des éléments de délimitation latéraux (46, 48) avec faces de délimitation (62, 64), sachant que la surface de soudage (80) présente l'allure d'un trapèze isocèle ouvert avec une face de fond (86) et des faces latérales (88, 90), que la face de fond et les faces latérales respectives inscrivent un angle α tel que 125° ≤ α ≤ 145°, et que les faces latérales sont des faces intérieures de branches (98, 100) de la sonotrode (78) ou de la tête de sonotrode qui sont en ressaut par rapport à la face de fond sur une hauteur T et délimitent latéralement la tête de sonotrode,
**caractérisée en ce**
**que** les branches (98, 100) de la tête de sonotrode (78) présentent des faces frontales (94, 96) qui s'étendent parallèlement à la face de fond (86) de la surface de soudage (80), que chaque face frontale présente une largeur A telle que 0,25 mm ≤ A ≤ 1,5 mm, et que la tête de sonotrode présente une largeur B dont la relation par rapport à la hauteur T est telle que 0,15 B ≤ T ≤ 0,30 B.
